# EUROPEAN PATENT SPECIFICATION

(11) **EP 3 202 735 B1**
(45) Date of publication and mention of the grant of the patent: **20.08.2025**
(21) Application number: 15847500.4
(22) Date of filing: 30.09.2015
(51) Int. Cl.: B32B 17/10

(54) **INTERLAYER FILM FOR LAMINATED GLASS, ROLL-SHAPED BODY, LAMINATED GLASS, METHOD FOR MANUFACTURING INTERLAYER FILM FOR LAMINATED GLASS, AND METHOD FOR MANUFACTURING ROLL-SHAPED BODY**
ZWISCHENSCHICHTFILM FÜR VERBUNDGLAS, ROLLENFÖRMIGER KÖRPER, VERBUNDGLAS, VERFAHREN ZUR HERSTELLUNG DES ZWISCHENSCHICHTFILMS FÜR VERBUNDGLAS UND VERFAHREN ZUR HERSTELLUNG DES ROLLENFÖRMIGEN KÖRPERS
FILM ENTRE COUCHES POUR VERRE FEUILLETÉ, CORPS EN FORME DE ROULEAU, VERRE FEUILLETÉ, PROCÉDÉ POUR LA FABRICATION D'UN FILM ENTRE COUCHES POUR VERRE FEUILLETÉ, ET PROCÉDÉ DE FABRICATION DE CORPS EN FORME DE ROULEAU

(30) Priority: 30.09.2014 JP 2014202346
(43) Date of publication of application: 09.08.2017
(73) Proprietor: Sekisui Chemical Co., Ltd., Osaka-shi, Osaka 530-0047 (JP)
(72) Inventor: HIROTA, Etsurou, Koka-shi Shiga 528-8585 (JP); KAWATE, Hiroshi, Koka-shi Shiga 528-8585 (JP); KIDO, Koji, Koka-shi Shiga 528-8585 (JP); MORI, Michiko, Koka-shi Shiga 528-8585 (JP)
(74) Representative: Cabinet Beau de Loménie
(86) International application number: PCT/JP2015/077732
(87) International publication number: WO 2016/052615

(56) References cited:
- EP-A1- 1 233 007
- EP-A1- 2 881 376
- EP-A1- 3 130 568
- EP-A1- 3 130 569
- EP-A2- 0 826 722
- WO-A1-2014/021459
- JP-A- 2007 050 612
- JP-A- 2011 115 954
- JP-A- 2011 115 954
- JP-A- H07 178 812
- JP-A- H08 143 344
- JP-A- H1 076 572
- KR-A- 20100 061 816
- US-A1- 2007 148 419
- US-A1- 2009 135 344

## Description

### TECHNICAL FIELD

The present invention relates to an interlayer film for a laminated glass which can exhibit high deaeration properties during preliminary pressure bonding and enables production of a highly transparent laminated glass. The present invention also relates to a roll, a laminated glass, a method for producing the interlayer film for a laminated glass, and a method for producing the roll.

### BACKGROUND ART

A laminated glass including two glass plates integrated through an interlayer film for a laminated glass containing plasticized polyvinyl butyral is widely used for windowpanes of vehicles, aircraft, and buildings.

Exemplary methods for producing a laminated glass include a rubber bag method and a nip roll method (see Patent Literature 1, for example). In the rubber bag method, an interlayer film for a laminated glass drawn out from a roll is cut to an appropriate size and sandwiched between at least two glass plates to give a laminate. The laminate is placed in a rubber bag and vacuum suctioned for removal of air remaining between the glass plates and the interlayer film so as to be preliminary pressure bonded. Then, the laminate is pressurized with heat, for example, in an autoclave for final pressure bonding. In the nip roll method, a laminate including at least two glass plates and an interlayer film for a laminated glass interposed between the glass plates is carried by a conveyor through a heating zone to be heated to a certain temperature, and then passed through nip rolls to be pressure bonded under heating, while the glass plates and the interlayer film are squeezed for reduction of air remaining therebetween. The laminate is thus preliminary pressure bonded while air between the interlayer film and the glass plates is reduced. The resulting laminate in a state where air therein is reduced is then subjected to final bonding under a high-temperature and high-pressure condition in an autoclave.

For production of a highly transparent laminated glass, deaeration properties upon stacking a glass plate and an interlayer film for a laminated glass on top of each other for preliminary pressure bonding is important in the process for producing a laminated glass. The interlayer film for a laminated glass commonly has minute projections and recesses formed on at least one surface for the purpose of ensuring the deaeration properties in production of a laminated glass.

In the case of a conventional interlayer film for a laminated glass, though it has minute projections and recesses on its surface, deaeration properties during the preliminary pressure bonding may be insufficient, leading to poor transparency of the resulting laminated glass. In particular, defective deaeration tends to occur in production of a large laminated glass to be used for buildings.

### CITATION LIST

### - Patent Literature

Patent Literature 1: JP H08-26789 A

Each of EP 3 130 568 A1 and EP 3 130 569 A1 is a prior art under Art. 54(3) EPC and shows an interlayer film for laminated glass having on at least one surface thereof a large number of adjacently arranged recesses and a large number of projections, the recesses having a groove shape with a continuous bottom inclined relative to the machine direction of the film in production of the interlayer film for laminated glass.

Two or more stacked resin layers and a plurality of fine convex sections and a plurality of fine concave sections formed on at least one surface thereof, the concave sections having a groove shape, wherein the bottom sections thereof are continuous, adjacent concave sections are parallel and formed in a regular manner, and the interval between adjacent concave sections is less than 750 µm, are present in an interlayer film for laminated glass of WO 2014/021459 A1, and an embossed interlayer film for laminated glass is shown in EP 1 233 007 A1.

For glass laminate interlayer films, surface modifications are shown with an embossment showing a center line average roughness Ra of from 0.05 to 2.0 µm and a number of peaks Pc of from 5 to 500 peaks/8 mm in EP 0 826 722 A2 or with differences in thickness of the film outside border regions not greater than ± 10% relative to the mean value of the thickness in this section in US 2007/0148419 A1.

JP 2001-11595 A teaches extruding a polyvinyl butyral film-based laminate while suppressing thickness variation.

### SUMMARY OF INVENTION

### - Technical Problem

The present invention aims to, in consideration of the state of the art, provide an interlayer film for a laminated glass which can exhibit high deaeration properties during preliminary pressure bonding and enables production of a highly transparent laminated glass. The present invention also aims to provide a roll, a laminated glass, a method for producing the interlayer film for a laminated glass, and a method for producing the roll.

### - Solution to problem

The present invention is defined in the claims.

The present invention is specifically described in the following.

The present inventors investigated the cause of insufficient deaeration during preliminary pressure bonding using a conventional interlayer film for a laminated glass having minute projections and recesses on its surface to find out that the variation in thickness in the machine direction of an interlayer film for a laminated glass causes non-uniform application of a pressure during preliminary pressure bonding, resulting in defective deaeration.

Specifically, in production of an interlayer film for a laminated glass, a raw material resin composition is extruded from an extruder to form an interlayer film. The extrusion conditions, such as extrusion speed, are set to be uniform but the extrusion conditions actually have fluctuations. Such fluctuations result in the variation in thickness of an interlayer film for a laminated glass to be obtained. Moreover, in the case of embossing a surface of an interlayer film for a laminated glass, the film is passed between embossing rolls under heating. The eccentricity of the embossing rolls at that time also presumably causes the variation in thickness of an interlayer film for a laminated glass to be obtained.

The present inventors made further intensive studies to find out that an interlayer film for a laminated glass can exhibit high deaeration properties upon preliminary pressure bonding and enables production of a highly transparent laminated glass in a case where the interlayer film for a laminated glass has a large number of recesses and a large number of projections and has a thickness with a variation of less than 40 µm at a central portion, one end portion, and an other end portion in a width direction that is orthogonal, in the same plane, to a machine direction of the film in production of the interlayer film, the thickness being measured along 3 m in the machine direction of the film in production of the interlayer film for a laminated glass at the central portion, the one end portion, and the other end portion in the width direction. The present invention was thus completed.

The interlayer film for a laminated glass of the present invention has a thickness with a difference between a maximum thickness and a minimum thickness of less than 40 µm at each of a central portion, one end portion, and an other end portion in a width direction that is orthogonal, in the same plane, to a machine direction of the film in production of the interlayer film. The thickness is measured along 3 m in the machine direction of the film in production of the interlayer film for a laminated glass at the central portion, the one end portion, and the other end portion in the width direction. This allows the deaeration properties to be highly exhibited upon preliminary pressure bonding, leading to production of a highly transparent laminated glass. Here, the reason why the thickness is measured along "3 m" is that defective deaeration can be surely prevented when the variation in thickness is small in the length of 3 m even in production of a large laminated glass to be used for buildings. The difference between the maximum thickness and the minimum thickness at each of the central portion, the one end portion and the other end portion in the width direction is preferably 39 µm or less, more preferably 30 µm or less, still more preferably 25 µm or less, particularly preferably 15 µm or less.

The machine direction in production of the interlayer film for a laminated glass as used herein refers to the direction in which a raw material resin composition is extruded from an extruder in production of the interlayer film for a laminated glass.

The machine direction in production of the interlayer film for a laminated glass can be confirmed, for example, by the following method. The interlayer film for a laminated glass is stored in a thermostat at 140°C for 30 minutes, and the shrinkage is measured in the parallel direction and vertical direction of the film. The direction in which the shrinkage is larger is the machine direction. The machine direction can be confirmed also by the winding direction of a roll of the interlayer film for a laminated glass. Since the interlayer film for a laminated glass is wound up in the machine direction in production thereof to give a roll, the winding direction of the roll is the same as the machine direction of the film in production of the interlayer film for a laminated glass.

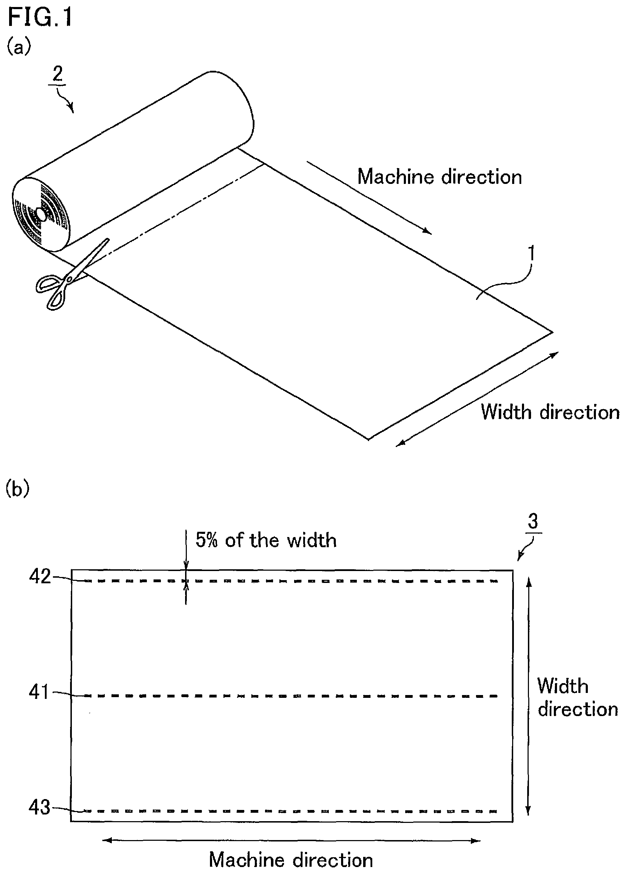

The method for measuring the thickness at the segment of the center, the segment of the one end, and the segment of the other end of the width directions of the interlayer film for a laminated glass of the present invention is specifically described with reference to Fig. 1. In Fig. 1(a), an interlayer film for a laminated glass 1 is drawn out from a roll 2. Here, the drawing direction corresponds to the machine direction of the interlayer film for a laminated glass and the direction orthogonal to the machine direction in the same plane corresponds to the width direction.

The drawn interlayer film for a laminated glass is cut at a position of 3 m or longer in the machine direction to give a test sample with a size of 3 m × film width (normally 1 m) (Fig. 1(b)). The test sample 3 is planarly left to stand at 20°C and 30%RH or lower for 24 hours, and the measurement is performed thereon. After the standing, the thickness at the segment of the center, the segment of the one end, and the segment of the other end of the width directions of the test sample 3 is measured. The thickness is measured under the conditions of 20°C and 30%RH or lower. On the test sample 3 shown in Fig. 1(b), a dotted line 41 is along the segment of the center of the width directions and dotted lines 42 and 43 are along the segment of the ends in the width directions. The segments of the ends of the width directions are each at a position shifted toward the segment of the center of the width directions by a distance corresponding to 5% of the width from an edge of the interlayer film for a laminated glass. The thickness is measured continuously along these dotted lines 41, 42, and 43 with a micrometer (e.g., KG601B-type wide-range electronic micrometer produced by Anritsu Corporation) at 1.5 m/min.

The difference between the maximum thickness and the minimum thickness is calculated for each of the segment of the center, the segment of the one end, and the segment of the other end of the width directions of the interlayer film for a laminated glass based on the obtained data.

The interlayer film for a laminated glass of the present invention contains a thermoplastic resin.

While examples of thermoplastic resins include polyvinylidene fluoride, polytetrafluoroethylene, vinylidene fluoride-propylene hexafluoride copolymers, polyethylene trifluoride, acrylonitrile-butadiene-styrene copolymers, polyester, polyether, polyamide, polycarbonate, polyacrylate, polymethacrylate, polyvinyl chloride, polyethylene, polypropylene, polystyrene, polyvinyl acetal, and ethylene-vinyl acetate copolymers, the interlayer film for a laminated glass of the present invention contains polyvinyl acetal as a thermoplastic resin.

The polyvinyl acetal can be prepared, for example, by acetalization of polyvinyl alcohol (PVA) with an aldehyde. The polyvinyl acetal is preferably an acetalization product of polyvinyl alcohol. The PVA commonly has a degree of saponification within a range of 70 to 99.9 mol%.

The PVA to be used for preparing the polyvinyl acetal has a degree of polymerization of preferably 200 or more, more preferably 500 or more, still more preferably 1700 or more, particularly preferably 2000 or more, and preferably 5000 or less, more preferably 4000 or less, still more preferably 3000 or less, furthermore preferably less than 3000, particularly preferably 2800 or less. The polyvinyl acetal is preferably a polyvinyl acetal prepared by acetalization of PVA having a degree of polymerization that satisfies the above lower limit and upper limit. When the degree of polymerization is equal to or more than the lower limit, a laminated glass to be obtained has higher penetration resistance. When the degree of polymerization is equal to lower than the upper limit, formation of an interlayer film is facilitated.

The degree of polymerization of PVA refers to the average degree of polymerization. The average degree of polymerization can be obtained by the method in conformity with JIS K6726 "Testing methods for polyvinyl alcohol". Commonly, the aldehyde is preferably a C1-C10 aldehyde. Examples of the C1-C10 aldehyde include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Preferred among these are n-butyraldehyde, n-hexylaldehyde, and n-valeraldehyde, and more preferred is n-butyraldehyde. These aldehydes may be used alone or in combination of two or more thereof.

The polyvinyl acetal is preferably polyvinyl butyral. The use of polyvinyl butyral further increases the weather resistance or like properties of the interlayer film relative to a laminated glass member.

The interlayer film for a laminated glass of the present invention preferably contains a plasticizer.

Any plasticizer may be used as long as it is commonly used in interlayer films for a laminated glass. Examples thereof include organic plasticizers such as monobasic organic acid esters and polybasic organic acid esters, and phosphoric acid plasticizers such as organophosphate compounds and organophosphite compounds.

Examples of the organic plasticizers include triethylene glycol-di-2-ethylhexanoate, triethylene glycol-di-2-ethylbutyrate, triethylene glycol-di-n-heptanoate, tetraethylene glycol-di-2-ethylhexanoate, tetraethylene glycol-di-2-ethylbutyrate, tetraethylene glycol-di-n-heptanoate, diethylene glycol-di-2-ethylhexanoate, diethylene glycol-di-2-ethylbutyrate, and diethylene glycol-di-n-heptanoate. Among these, the interlayer film for a laminated glass of the present invention contains preferably triethylene glycol-di-2-ethylhexanoate, triethylene glycol-di-2-ethylbutyrate, or triethylene glycol-di-n-heptanoate, more preferably triethylene glycol-di-2-ethylhexanoate.

In the interlayer film for a laminated glass of the present invention, the amount of the plasticizer relative to the amount of the thermoplastic resin is not particularly limited. The amount of the plasticizer based on 100 parts by mass of the thermoplastic resin is preferably 25 parts by mass or more, more preferably 30 parts by mass or more, still more preferably 35 parts by mass or more, and preferably 80 parts by mass or less, more preferably 60 parts by mass or less, still more preferably 50 parts by mass or less. When the amount of the plasticizer is equal to or more than the lower limit, a laminated glass to be obtained has higher penetration resistance. When the amount of the plasticizer is equal to or less than the upper limit, an interlayer film to be obtained has higher transparency.

The interlayer film for a laminated glass of the present invention preferably contains an adhesion modifier.

As the adhesion modifier, for example, an alkali metal salt or an alkaline earth metal salt is preferably used. Examples of the adhesion modifier include salts such as potassium, sodium, and magnesium salts.

Examples of an acid forming the salts include organic carboxylic acids such as octylic acid, hexylic acid, 2-ethylbutyric acid, butyric acid, acetic acid, and formic acid, and inorganic acids such as hydrochloric acid and nitric acid.

The interlayer film for a laminated glass of the present invention may optionally contain additives such as an antioxidant, a light stabilizer, a modified silicone oil as an adhesion modifier, a flame retardant, an antistatic agent, a damp proofing agent, a heat ray reflecting agent, a heat ray absorbing agent, an anti-blocking agent, an antistatic agent, and a colorant including pigments or dyes.

The interlayer film for a laminated glass of the present invention has a multilayer structure.

The interlayer film for a laminated glass of the present invention having a multilayer structure is an interlayer film for a laminated glass having excellent sound insulation properties (hereafter, also referred to as a "sound insulation interlayer film") which includes two protective layers as the first resin layers and a sound insulation layer as the second resin layer interposed between the protective layers with an aim of improving the sound insulation properties.

The sound insulation interlayer film is more specifically described in the following.

In the sound insulation interlayer film, the sound insulation layer provides sound insulation properties.

The sound insulation layer preferably contains polyvinyl acetal X and a plasticizer.

The polyvinyl acetal X can be prepared by acetalization of polyvinyl alcohol with an aldehyde. The polyvinyl acetal X is preferably an acetalization product of polyvinyl alcohol. The polyvinyl alcohol is commonly obtained by saponifying polyvinyl acetate.

The lower limit of the degree of polymerization of the polyvinyl alcohol is preferably 200, and the upper limit thereof is preferably 5000. When the polyvinyl alcohol has a degree of polymerization of 200 or more, a sound insulation interlayer film to be obtained can have better penetration resistance. When the polyvinyl alcohol has a degree of polymerization of 5000 or less, formability of a sound insulation layer can be ensured. The lower limit is more preferably 500 and the upper limit is more preferably 4000.

The lower limit of the carbon number of the aldehyde used for acetalization of the polyvinyl alcohol is preferably 4, and the upper limit thereof is preferably 6. When the aldehyde has a carbon number of 4 or more, a sound insulation interlayer film for a laminated glass to be obtained can stably contain a sufficient amount of a plasticizer. As a result, the sound insulation interlayer film can exhibit excellent sound insulation properties. Moreover, bleeding out of the plasticizer can be prevented. When the aldehyde has a carbon number of 6 or less, synthesis of the polyvinyl acetal X can be facilitated, ensuring the productivity.

The C4-C6 aldehyde may be a linear or branched aldehyde, and examples thereof include n-butyraldehyde and n-valeraldehyde.

The upper limit of the hydroxy group content of the polyvinyl acetal X is preferably 30 mol%. When the hydroxy group content of the polyvinyl acetal X is 30 mol% or less, the sound insulation layer can contain a plasticizer in an amount needed for exhibiting sound insulation properties, and bleeding out of the plasticizer can be prevented. The upper limit of the hydroxy group content of the polyvinyl acetal X is more preferably 28 mol%, still more preferably 26 mol%, particularly preferably 24 mol%, and the lower limit thereof is preferably 10 mol%, more preferably 15 mol%, still more preferably 20 mol%.

The hydroxy group content of the polyvinyl acetal X is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined by measuring the amount of ethylene groups to which hydroxy groups are bonded in the polyvinyl acetal X by the method in conformity with JIS K6728 "Testing methods for polyvinyl butyral".

The lower limit of the acetal group content of the polyvinyl acetal X is preferably 60 mol%, and the upper limit thereof is preferably 85 mol%. When the polyvinyl acetal X has an acetal group content of 60 mol% or more, the sound insulation layer has higher hydrophobicity and can contain a plasticizer in an amount needed for exhibiting sound insulation properties. Moreover, bleeding out of the plasticizer and whitening can be prevented. When the polyvinyl acetal X has an acetal group content of 85 mol% or less, synthesis of the polyvinyl acetal X can be facilitated, ensuring the productivity. The acetal group content can be obtained by measuring the amount of ethylene groups to which acetal groups are bonded in the polyvinyl acetal X by the method in conformity with JIS K6728 "Testing methods for polyvinyl butyral".

The lower limit of the acetyl group content of the polyvinyl acetal X is preferably 0.1 mol%, and the upper limit thereof is preferably 30 mol%. When the acetyl group content of the polyvinyl acetal X is 0.1 mol% or more, the sound insulation layer can contain a plasticizer in an amount needed for exhibiting sound insulation properties, and bleeding out of the plasticizer can be prevented. When the acetyl group content of the polyvinyl acetal X is 30 mol% or less, the sound insulation layer can have higher hydrophobicity, preventing whitening. The lower limit of the acetyl group content is more preferably 1 mol%, still more preferably 5 mol%, particularly preferably 8 mol%, and the upper limit thereof is more preferably 25 mol%, still more preferably 20 mol%. The acetyl group content is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the obtained value by the total amount of ethylene groups of the main chain.

The polyvinyl acetal X is preferably a polyvinyl acetal having an acetyl group content of 8 mol% or more or a polyvinyl acetal having an acetyl group content of less than 8 mol% and an acetal group content of 68 mol% or more because the sound insulation layer can readily contain a plasticizer in an amount needed for exhibiting sound insulation properties.

The lower limit of the plasticizer content of the sound insulation layer based on 100 parts by mass of the polyvinyl acetal X is preferably 45 parts by mass, and the upper limit thereof is preferably 80 parts by mass. When the plasticizer content is 45 parts by mass or more, the sound insulation layer can exhibit high sound insulation properties. When the plasticizer content is 80 parts by mass or less, reduction in the transparency and adhesiveness of an interlayer film for a laminated glass to be obtained due to bleeding out of the plasticizer can be prevented. The lower limit of the plasticizer content is more preferably 50 parts by mass, still more preferably 55 parts by mass, and the upper limit thereof is more preferably 75 parts by mass, still more preferably 70 parts by mass.

The lower limit of the thickness of the sound insulation layer is preferably 50 µm. When the sound insulation layer has a thickness of 50 µm or more, the sound insulation layer can exhibit enough sound insulation properties. The lower limit of the thickness of the sound insulation layer is more preferably 70 µm, still more preferably 80 µm. The upper limit thereof is not particularly limited. In consideration of the thickness as an interlayer film for a laminated glass, the upper limit is preferably 150 µm.

The protective layer prevents bleeding out of the plasticizer contained in a large amount in the sound insulation layer to prevent reduction in the adhesiveness between the interlayer film for a laminated glass and the glass plate, and imparts penetration resistance to the interlayer film for a laminated glass.

The protective layer preferably contains, for example, a plasticizer and polyvinyl acetal Y, more preferably a plasticizer and polyvinyl acetal Y having a larger hydroxy group content than polyvinyl acetal X.

The polyvinyl acetal Y can be prepared by acetalization of polyvinyl alcohol with an aldehyde. The polyvinyl acetal Y is preferably an acetalization product of polyvinyl alcohol.

The polyvinyl alcohol is commonly obtained by saponifying polyvinyl acetate. The lower limit of the degree of polymerization of the polyvinyl alcohol is preferably 200, and the upper limit thereof is preferably 5000. When the polyvinyl alcohol has a degree of polymerization of 200 or more, an interlayer film for a laminated glass to be obtained can have better penetration resistance. When the polyvinyl alcohol has a degree of polymerization of 5000 or less, formability of a protective layer can be ensured. The lower limit is more preferably 500 and the upper limit is more preferably 4000.

The lower limit of the carbon number of the aldehyde used for acetalization of the polyvinyl alcohol is preferably 3, and the upper limit thereof is preferably 4. When the aldehyde has a carbon number of 3 or more, an interlayer film for a laminated glass to be obtained has higher penetration resistance. When the aldehyde has a carbon number of 4 or less, productivity of the polyvinyl acetal Y is improved.

The C3-C4 aldehyde may be a linear or branched aldehyde, and examples thereof include n-butyraldehyde.

The upper limit of the hydroxy group content of the polyvinyl acetal Y is preferably 33 mol%, and the lower limit thereof is preferably 28 mol%. When the polyvinyl acetal Y has a hydroxy group content of 33 mol% or less, whitening of an interlayer film for a laminated glass to be obtained can be prevented. When the polyvinyl acetal Y has a hydroxy group content of 28 mol% or more, an interlayer film for a laminated glass to be obtained has higher penetration resistance.

The lower limit of the acetal group content of the polyvinyl acetal Y is preferably 60 mol%, and the upper limit thereof is preferably 80 mol%. When the acetal group content is 60 mol% or more, a protective layer to be obtained can contain a plasticizer in an amount needed for exhibiting enough penetration resistance. When the acetal group content is 80 mol% or less, the adhesion force between the protective layer and the glass plate can be ensured. The lower limit of the acetal group content is more preferably 65 mol%, and the upper limit thereof is more preferably 69 mol%.

The upper limit of the acetyl group content of the polyvinyl acetal Y is preferably 7 mol%. When the polyvinyl acetal Y has an acetyl group content of 7 mol% or less, a protective layer to be obtained can have higher hydrophobicity, thereby preventing whitening. The upper limit of the acetyl group content is more preferably 2 mol%, and the lower limit thereof is preferably 0.1 mol%. The hydroxy group content, acetal group content, and acetyl group content of the polyvinyl acetal Y can be measured by the same method as that in the case of the polyvinyl acetal X.

The lower limit of the plasticizer content in the protective layer based on 100 parts by mass of the polyvinyl acetal Y is preferably 20 parts by mass, and the upper limit thereof is preferably 45 parts by mass. When the plasticizer content is 20 parts by mass or more, the penetration resistance can be ensured. When the plasticizer content is 45 parts by mass or less, bleeding out of the plasticizer can be prevented, thereby preventing reduction in the transparency and adhesiveness of an interlayer film for a laminated glass to be obtained. The lower limit of the plasticizer content is more preferably 30 parts by mass, still more preferably 35 parts by mass, and the upper limit thereof is more preferably 43 parts by mass, still more preferably 41 parts by mass. For better sound insulation properties of a laminated glass to be obtained, the plasticizer content in the protective layer is preferably smaller than the plasticizer content in the sound insulation layer.

For higher sound insulation properties of a laminated glass to be obtained, the hydroxy group content of the polyvinyl acetal Y is preferably larger than the hydroxy group content of the polyvinyl acetal X, more preferably larger by 1 mol% or more, still more preferably larger by 5 mol% or more, particularly preferably larger by 8 mol% or more. Adjustment of the hydroxy group contents of the polyvinyl acetal X and polyvinyl acetal Y enables control of the plasticizer contents in the sound insulation layer and the protective layer, so that the sound insulation layer has a lower glass transition temperature. As a result, a laminated glass to be obtained has higher sound insulation properties.

For still higher sound insulation properties of a laminated glass to be obtained, the plasticizer content (hereafter, also referred to as content X) based on 100 parts by mass of the polyvinyl acetal X in the sound insulation layer is preferably larger than the plasticizer content (hereafter, also referred to as content Y) based on 100 parts by mass of the polyvinyl acetal Y in the protective layer, more preferably larger by 5 parts by mass or more, still more preferably larger by 15 parts by mass or more, particularly preferably larger by 20 parts by mass or more. Adjustment of the content X and content Y lowers the glass transition temperature of the sound insulation layer. As a result, a laminated glass to be obtained has still higher sound insulation properties.

The lower limit of the thickness of the protective layer is preferably 200 µm, and the upper limit thereof is preferably 1000 µm. When the protective layer has a thickness of 200 µm or more, the penetration resistance can be ensured.

The lower limit of the thickness of the protective layer is more preferably 300 µm, and the upper limit thereof is more preferably 700 µm.

The sound insulation interlayer film may be produced by any method. The sound insulation interlayer film can be produced, for example, by a method of forming the sound insulation layer and protective layers as sheet materials by a conventional film formation method such as extrusion, calendering, or pressing and then laminating the obtained sheet materials.

The interlayer film for a laminated glass of the present invention can be produced, for example, by a method of extrusion molding a raw material resin composition using an extruder. Control of the extrusion-molding conditions enables production of an interlayer film for a laminated glass having a thickness with a difference between the maximum thickness and the minimum thickness of less than 40 µm at each of the central portion, the one end portion, and the other end portion in the width direction. In the case of embossing a surface of the interlayer film for a laminated glass, the interlayer film for a laminated glass satisfying the expansion coefficient in the width direction and the shrinkage coefficient in the machine direction is hardly obtained by the method using an embossing roll, and therefore, a lip method in which ingenuity is exercised in the shape of a die lip of a die of an extruder to form projections and recesses is preferably employed.

Specifically, in the extrusion step of extruding a raw material resin composition from a die using an extruder, the variation in delivery pressure of the extruder is set to ±5 kg/cm² or less and the variation in temperature of the die is set to ±20°C or less. When the extrusion conditions are controlled as described above, an interlayer film for a laminated glass to be obtained has a thickness with a difference between the maximum thickness and the minimum thickness of less than 40 µm at each of the central portion, the one end portion, and the other end portion in the width direction.

The present invention also encompasses the method for producing an interlayer film for a laminated glass of claim 5 and a method of producing a roll comprising the method of claim 5.

The interlayer film for a laminated glass prepared by extruding a raw material resin composition from a die using an extruder can be wound up in the machine direction of the film in production thereof into a roll to be used for production of a laminated glass.

The present invention also encompasses a roll prepared by winding up the interlayer film for a laminated glass of the present invention in the machine direction of the film in production thereof.

The present invention's method for producing a roll includes an extrusion step of extruding a raw material resin composition from a die using an extruder to form an interlayer film for a laminated glass; and a winding step of winding up the interlayer film for a laminated glass into a roll in an extrusion direction of the extruded interlayer film for a laminated glass, the extruder having a variation in delivery pressure during the extrusion step of ±5 kg/cm² or less, the die having a variation in temperature during the extrusion step of ±20°C or less.

The present invention further encompasses a laminated glass including a pair of glass plates and the interlayer film for a laminated glass of the present invention interposed between the pair of glass plates.

The glass plate may be a commonly used transparent glass plate. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. An ultraviolet shielding glass plate including an ultraviolet shielding coat layer on a glass surface may also be used. Other examples of the glass plates include organic plastic plates made of polyethylene terephthalate, polycarbonate, polyacrylate, or the like.

The glass plates may include two or more types of glass plates. For example, the laminated glass may be a laminate including the interlayer film for a laminated glass of the present invention between a transparent float glass plate and a colored glass plate such as a green glass plate. The glass plates may include two or more glass plates with a different thickness.

### - Advantageous Effects of Invention

The present invention can provide an interlayer film for a laminated glass, which can exhibit high deaeration properties during preliminary pressure bonding and enables production of a highly transparent laminated glass. The present invention also can provide a roll, a laminated glass, a method for producing the interlayer film for a laminated glass, and a method for producing the roll.

### BRIEF DESCRIPTION OF DRAWINGS

Fig. 1 is a schematic view for explaining a method for measuring the thickness of an interlayer film for a laminated glass at a central portion, one end portion, and an other end portion in the width direction of the film.

### DESCRIPTION OF EMBODIMENTS

Embodiments of the present invention are specifically described with reference to, but not limited to, examples.

### (Example 1)

To 100 parts by mass of a polyvinyl butyral resin (hydroxy group content: 30 mol%, degree of acetylation: 1 mol%, degree of butyralization: 69 mol%, average degree of polymerization: 1700) were added 40 parts by mass of triethylene glycol-di-2-ethylhexanoate (3GO) as a plasticizer, 0.5 parts by mass of 2-(2'-hydroxy-3'-t-butyl-5-methylphenyl)-5-chlorobenzotriazole ("Tinuvin326" produced by Basf SE) as an ultraviolet light shielding agent, and 0.5 parts by mass of 2,6-di-t-butyl-p-cresol (BHT) as an antioxidant, and kneaded with a mixing roll sufficiently to give a resin composition.

The obtained resin composition was extruded from an extruder to form a single layer interlayer film for a laminated glass having a width of 100 cm. The interlayer film was wound into a roll. At this time, a lip die with a lip interval of 1.2 mm was used. The variation in delivery pressure of the extruder was set to ±3 kg/cm² or less and the variation in temperature of the die was set to ±10°C or less.

### (Examples 2 to 8, Comparative Examples 1 to 5)

An interlayer film for a laminated glass was obtained as in Example 1, except that the extrusion conditions were changed within a range that the variation in delivery pressure of the extruder was ±5 kg/cm² or less and the variation in temperature of the die was ±20°C or less.

### (Example 9)

### (Preparation of a resin composition for protective layers)

To 100 parts by weight of a polyvinyl butyral resin (a hydroxy group content: 30 mol%, degree of acetylation: 1 mol%, degree of butyralization: 69 mol%, average degree of polymerization: 1700) were added 40 parts by weight of triethylene glycol-di-2-ethylhexanoate (3GO) as a plasticizer, 0.5 parts by weight of 2-(2'-hydroxy-3'-t-butyl-5-methylphenyl)-5-chlorobenzotriazole ("Tinuvin326" produced by Basf SE) as an ultraviolet light shielding agent, and 0.5 parts by weight of 2,6-di-t-butyl-p-cresol (BHT) as an antioxidant, and kneaded with a mixing roll sufficiently to give a resin composition for protective layers.

### (Preparation of a resin composition for sound insulation layers)

To 100 parts by weight of a polyvinyl butyral resin (hydroxy group content: 23 mol%, degree of acetylation: 12 mol%, degree of butyralization: 65 mol%, average degree of polymerization: 2300) were added 60 parts by weight of triethylene glycol-di-2-ethylhexanoate (3GO) as a plasticizer, and kneaded with a mixing roll sufficiently to give a resin composition for sound insulation layers.

### (Production of an interlayer film for a laminated glass)

The resin composition for sound insulation layers and the resin composition for protective layers were coextruded to form an interlayer film for a laminated glass (width: 100 cm) having a triple layer structure including a protective layer (thickness: 350 µm), a sound insulation layer (thickness: 100 µm), and a protective layer (thickness: 350 µm) stacked in said order in the thickness direction. The formed interlayer film for a laminated glass was wound into a roll. At this time, a lip die with a lip interval of 1.2 mm was used. The variation in delivery pressure of the extruder was set to ±3 kg/cm² or less and the variation in temperature of the die was set to ±10°C.

### (Example 10)

An interlayer film for a laminated glass was obtained as in Example 9, except that the extrusion conditions were changed within a range that the variation in delivery pressure of the extruder was ±5 kg/cm² or less and the variation in temperature of the die was ±20°C or less.

### (Evaluation)

The interlayer films for a laminated glass obtained in the examples and the comparative examples were evaluated by the following methods.

Table 1 shows the results.

### (1) Evaluation of variation in thickness in the machine direction of interlayer film for a laminated glass

The variation in thickness in the machine direction of the interlayer film for a laminated glass was evaluated by the method shown in Fig. 1.

First, the interlayer film for a laminated glass was drawn out from the roll and cut at 3 m or longer in the machine direction to give a test sample with a size of 3 m × 1 m. The obtained test sample was planarly left to stand at 20°C and 30%RH or less for 24 hours, and the measurement was performed thereon.

The thickness of the interlayer film for a laminated glass was measured continuously at 1.5 m/min using a micrometer (KG601B-type wide-range electronic micrometer produced by Anritsu Corporation) along the dotted line 41 along the central portion in the width direction and the dotted lines 42 and 43 along the end portions (at a position shifted toward the central portion in the width direction from the edge by a distance corresponding to 5% of the width of the interlayer film for a laminated glass) in the width direction on the test sample after standing. The measurement was performed at 20°C and 30%RH or less.

The difference between the maximum thickness and the minimum thickness was calculated for each of the central portion, the one end portion, and the other end portion in the width direction of the interlayer film for a laminated glass based on the obtained data.

### (2) Evaluation of deaeration properties upon preliminary pressure bonding

Six pairs of transparent float glass plates (100 cm in length × 50 cm in width × 2 mm in thickness) were prepared. The test sample (size: 3 m × 1 m) obtained in the evaluation of the variation in thickness in the machine direction was cut into six pieces (size: 1 m × 0.5 m). The test sample was cut in such a manner that the direction of a 3-m side of the test sample and the direction of a 1-m side of the cut sample piece were in parallel with each other. The resulting six test sample pieces were sandwiched between the six pairs of transparent float glass plates, respectively, thereby preparing six laminates. The obtained laminates were heated in a heating oven until the temperature of the laminates (preliminary pressure bonding temperature) reached 50°C to 70°C, and transferred between nip rolls (nip pressure by air cylinder: 5 kg/cm², linear velocity: 5 m/min), thereby performing preliminary pressure bonding.

The total light transmittance of the preliminary pressure-bonded laminates was measured with a haze meter (TC-H3DP produced by Tokyo Denshoku Co., Ltd.) in accordance with JIS-K7105. The case where the average total light transmittance of six laminates was 60% or higher was rated "Excellent (oo)". The case where the average total light transmittance was 50% or higher but lower than 60% was rated "Good (∘)". The case where the average total light transmittance was 40% or higher but lower than 50% was rated "Not good (Δ)". The case where the average total light transmittance was less than 40% was rated "Poor (×)".

**[Table 1]**

| | Variation in film thickness in machine direction (*µ*m) | | | Structure of film | Deaeration properties upon preliminary pressure bonding | |
|---|---|---|---|---|---|---|
| | End portion | Central portion | End portion | | Temperature condition | Transmittance |
| Example 1 | 15 | 23 | 17 | Single layer | 50 | ○ |
| Example 2 | 15 | 23 | 17 | Single layer | 70 | ○○ |
| Example 3 | 30 | 22 | 29 | Single layer | 50 | ○ |
| Example 4 | 30 | 22 | 29 | Single layer | 70 | ○ |
| Example 5 | 30 | 29 | 30 | Single layer | 50 | ○ |
| Example 6 | 20 | 18 | 20 | Single layer | 70 | ○ |
| Example 7 | 38 | 31 | 25 | Single layer | 50 | ○ |
| Example 8 | 39 | 27 | 30 | Single layer | 70 | ○ |
| Example 9 | 24 | 19 | 23 | Triple layer | 70 | ○ |
| Example 10 | 28 | 39 | 30 | Triple layer | 50 | ○ |
| Comparative Example 1 | 42 | 40 | 43 | Single layer | 50 | × |
| Comparative Example 2 | 42 | 40 | 43 | Single layer | 70 | Δ |
| Comparative Example 3 | 48 | 49 | 51 | Single layer | 50 | × |
| Comparative Example 4 | 48 | 49 | 51 | Single layer | 70 | × |
| Comparative Example 5 | 30 | 40 | 50 | Single layer | 50 | Δ |

### INDUSTRIAL APPLICABILITY

The present invention can provide an interlayer film for a laminated glass, which can exhibit high deaeration properties during preliminary pressure bonding and enables production of a highly transparent laminated glass. The present invention also can provide a roll, a method for producing the interlayer film for a laminated glass, and a method for producing the roll.

### REFERENCE SIGNS LIST

1: Interlayer film for a laminated glass
2: Roll
3: Test sample
41: Dotted line along the central portion in the width direction on the test sample 3
42, 43: Dotted line along the end portion in the width direction on the test sample 3

## Claims

1. An interlayer film (1) for a laminated glass with sound insulation properties, containing polyvinyl acetal as a thermoplastic resin, having a large number of recesses and a large number of projections on at least one surface, and including two protective layers containing polyvinyl acetal and a sound insulation layer containing polyvinyl acetal interposed between the protective layers,
the interlayer film for a laminated glass having a thickness with a difference between a maximum thickness and a minimum thickness, when taking directions orthogonal, on the same plane, to a machine direction of the film in production of the interlayer film for a laminated glass as width directions, of less than 40 µm at each of linear segments being
a segment of a center of the width directions,
a segment of one end of the width directions, and
a segment of an other end of the width directions, in a continuous thickness measurement as described in the description with a micrometer at 1.5 m/min along 3 m in the machine direction of the film in production of the interlayer film for a laminated glass at the segment of the center, the segment of the one end, and the segment of the other end of the width directions,
wherein the segments of the ends of the width directions are each at a position shifted toward the segment of the center of the width directions by a distance corresponding to 5% of the width from an edge of the interlayer film for a laminated glass.

2. The interlayer film (1) for a laminated glass with sound insulation properties according to claim 1,
wherein the lower limit of the thickness of each of the protective layers is 200 µm and the upper limit of the thickness of each of the protective layers is 1000 µm, and the lower limit of the thickness of the sound insulation layer is 50 µm and the upper limit of the thickness of the sound insulation layer is 150 µm.

3. The interlayer film (1) for a laminated glass with sound insulation properties according to claim 1 or 2,
wherein said difference is 30 µm or less.

4. The interlayer film (1) for a laminated glass with sound insulation properties according to claims 2 and 3,
wherein
the sound insulation layer contains polyvinyl acetal obtained by saponifying polyvinyl acetate and having a degree of polymerization from 200 to 5000 and a plasticizer content based on 100 parts by mass of the polyvinyl acetal from 45 parts by mass to 80 parts by mass, wherein of the thickness of the sound insulation layer, the lower limit is 80 µm and the upper limit is 150 µm, and
the protective layers are for preventing bleeding out of the plasticizer contained in the sound insulation layer and contain a polyvinyl acetal obtained by acetalization of polyvinyl alcohol with an aldehyde and have a degree of polymerization from 200 to 5000 and a plasticizer content based on 100 parts by mass of the polyvinyl acetal from 20 parts by mass to 45 parts by mass, wherein of the thickness of each of the protective layers, the lower limit is 300 µm and the upper limit is 700 µm.

5. The interlayer film for a laminated glass with sound insulation properties according to any one of claims 1 to 4,
wherein the laminated glass with sound insulation properties is a large laminated glass for buildings.

6. A roll (2) comprising the interlayer film for a laminated glass with sound insulation properties according to any one of claims 1 to 5, wound up in a machine direction of the film in production of the interlayer film for a laminated glass.

7. A laminated glass with sound insulation properties comprising:
a pair of glass plates; and
the interlayer film (1) for a laminated glass with sound insulation properties according to any one of claims 1 to 5, interposed between the pair of glass plates.

8. A method for producing the interlayer film (1) for a laminated glass with sound insulation properties according to any one of claims 1 to 5, comprising an extrusion step of extruding a raw material resin composition from a die using an extruder,
the extruder having a variation in delivery pressure during the extrusion step of ±5 kg/cm² or less, the die having a variation in temperature during the extrusion step of ±20°C or less.

9. The method of claim 8, wherein said extrusion step is a lip method.

10. A method for producing the roll (2) according to claim 6, comprising:
an extrusion step of extruding a raw material resin composition from a die using an extruder to form an interlayer film for a laminated glass; and
a winding step of winding the interlayer film for a laminated glass into a roll in an extrusion direction of the extruded interlayer film for a laminated glass,
the extruder having a variation in delivery pressure during the extrusion step of ±5 kg/cm² or less, the die having a variation in temperature during the extrusion step of ±20°C or less.

## Patentansprüche

1. Zwischenschichtfilm (1) für ein Verbundglas mit Schalldämmeigenschaften, der Polyvinylacetal als thermoplastisches Harz enthält, eine große Anzahl von Vertiefungen und eine große Anzahl von Vorsprüngen auf mindestens einer Oberfläche aufweist und zwei Schutzschichten, die Polyvinylacetal enthalten, und eine Schalldämmschicht, die Polyvinylacetal enthält, die zwischen die Schutzschichten eingefügt ist, beinhaltet,
wobei der Zwischenschichtfilm für ein Verbundglas eine Stärke aufweist, bei der die Differenz zwischen einer maximalen Stärke und einer minimalen Stärke, genommen in Richtungen, die orthogonal zu einer Maschinenrichtung des Films bei der Herstellung des Zwischenschichtfilms für ein Verbundglas in derselben Ebene liegen, als Breitenrichtungen, weniger als 40 µm in jedem der linearen Segmente ist, die wie folgt sind
ein Segment einer Mitte der Breitenrichtungen,
ein Segment eines Endes der Breitenrichtungen, und
ein Segment eines anderen Endes der Breitenrichtungen,
bei einer kontinuierlichen Stärkenmessung wie beschrieben in der Beschreibung mit einem Mikrometer bei 1,5 m/min entlang 3 m in Maschinenrichtung des Films bei der Herstellung des Zwischenschichtfilms für ein Verbundglas in dem Segment der Mitte, dem Segment des einen Endes und dem Segment des anderen Endes der Breitenrichtungen,
wobei die Segmente der Enden der Breitenrichtungen jeweils an einer Position sind, die in Richtung des Segments der Mitte der Breitenrichtungen um einen Abstand verschoben ist, der 5 % der Breite von einem Rand des Zwischenschichtfilms für ein Verbundglas entspricht.

2. Zwischenschichtfilm (1) für ein Verbundglas mit Schalldämmeigenschaften nach Anspruch 1,
wobei die Untergrenze der Stärke jeder der Schutzschichten 200 µm und die Obergrenze der Stärke jeder der Schutzschichten 1000 µm ist, und die Untergrenze der Stärke der Schalldämmschicht 50 µm und die Obergrenze der Stärke der Schalldämmschicht 150 µm ist.

3. Zwischenschichtfilm (1) für ein Verbundglas mit Schalldämmeigenschaften nach Anspruch 1 oder 2,
wobei die Differenz 30 µm oder weniger ist.

4. Zwischenschichtfilm (1) für ein Verbundglas mit Schalldämmeigenschaften nach den Ansprüchen 2 und 3,
wobei
die Schalldämmschicht Polyvinylacetal enthält, das durch Verseifen von Polyvinylacetat erlangt wird und einen Polymerisationsgrad von 200 bis 5000 und einen Weichmachergehalt, bezogen auf 100 Masseteile des Polyvinylacetals, von 45 Masseteilen bis 80 Masseteilen aufweist, wobei die Untergrenze der Stärke der Schalldämmschicht 80 µm und die Obergrenze 150 µm ist, und
die Schutzschichten zum Verhindern eines Ausblutens des in der Schalldämmschicht enthaltenen Weichmachers dienen und ein Polyvinylacetal enthalten, das durch Acetalisieren von Polyvinylalkohol mit einem Aldehyd erlangt wird und einen Polymerisationsgrad von 200 bis 5000 und einen Weichmachergehalt, bezogen auf 100 Masseteile des Polyvinylacetals, von 20 Masseteilen bis 45 Masseteilen aufweist, wobei bei der Stärke jeder der Schutzschichten die Untergrenze 300 µm und die Obergrenze 700 µm ist.

5. Zwischenschichtfilm für ein Verbundglas mit Schalldämmeigenschaften nach einem der Ansprüche 1 bis 4,
wobei das Verbundglas mit Schalldämmeigenschaften ein großes Verbundglas für Gebäude ist.

6. Rolle (2), umfassend den Zwischenschichtfilm für ein Verbundglas mit Schalldämmeigenschaften nach einem der Ansprüche 1 bis 5, aufgewickelt bei der Herstellung des Zwischenschichtfilms für ein Verbundglas in Maschinenrichtung des Films.

7. Verbundglas mit Schalldämmeigenschaften, umfassend:
ein Paar Glasplatten; und
den Zwischenschichtfilm (1) für ein Verbundglas mit Schalldämmeigenschaften nach einem der Ansprüche 1 bis 5, der zwischen das Paar Glasplatten eingefügt ist.

8. Verfahren zur Herstellung des Zwischenschichtfilms (1) für ein Verbundglas mit Schalldämmeigenschaften nach einem der Ansprüche 1 bis 5, umfassend einen Extrusionsschritt des Extrudierens einer Rohmaterial-Harzzusammensetzung aus einer Düse unter Verwendung eines Extruders,
wobei der Extruder während des Extrusionsschritts eine Schwankung des Förderdrucks von ±5 kg/cm² oder weniger aufweist und die Düse während des Extrusionsschritts eine Temperaturschwankung von ±20 °C oder weniger aufweist.

9. Verfahren nach Anspruch 8, wobei der Extrusionsschritt ein Lippenverfahren ist.

10. Verfahren zur Herstellung der Rolle (2) nach Anspruch 6, umfassend:
einen Extrusionsschritt eines Extrudierens einer Rohmaterial-Harzzusammensetzung aus einer Düse unter Verwendung eines Extruders, um einen Zwischenschichtfilm für ein Verbundglas zu bilden; und
einen Wickelschritt eines Aufwickelns des Zwischenschichtfilm für ein Verbundglas zu einer Rolle in einer Extrusionsrichtung des extrudierten Zwischenschichtfilms für ein Verbundglas,
wobei der Extruder während des Extrusionsschritts eine Schwankung des Förderdrucks von ±5 kg/cm² oder weniger aufweist und die Düse während des Extrusionsschritts eine Temperaturschwankung von ±20 °C oder weniger aufweist.

## Revendications

1. Film intercalaire (1) pour verre feuilleté avec des propriétés d'isolation phonique, contenant de l'acétal de polyvinyle comme résine thermoplastique, présentant un grand nombre d'évidements et un grand nombre de saillies sur au moins une surface, et comprenant deux couches protectrices contenant de l'acétal de polyvinyle et une couche d'isolation phonique contenant de l'acétal de polyvinyle intercalé entre les couches protectrices,
le film intercalaire pour verre feuilleté, présentant une épaisseur avec une différence entre une épaisseur maximale et une épaisseur minimale, lorsqu'on prend, comme directions de largeur, les directions orthogonales, sur le même plan, à une direction de machine du film, lors de la production du film intercalaire pour verre feuilleté de moins de 40 µm au niveau de chacun des segments linéaires, étant :
un segment du centre des directions de largeur,
un segment d'une extrémité des directions de largeur, et
un segment de l'autre extrémité des directions de largeur,
lors d'une mesure d'épaisseur continue avec un micromètre à 1,5 m/min sur 3 m dans la direction de machine du film lors de la production du film intercalaire pour verre feuilleté au niveau du segment du centre, du segment de l'une des extrémités et du segment de l'autre extrémité des directions de largeur,
dans lequel les segments des extrémités des directions de largeur sont chacun à une position décalée, vers le segment du centre des directions de largeur, d'une distance correspondant à 5 % de la largeur à partir d'un bord du film intercalaire pour verre feuilleté.

2. Film intercalaire (1) pour verre feuilleté avec des propriétés d'isolation phonique selon la revendication 1,
dans lequel la limite inférieure de l'épaisseur de chacune des couches protectrices est de 200 µm et la limite supérieure de l'épaisseur de chacune des couches protectrices est de 1 000 µm, et la limite inférieure de l'épaisseur de la couche d'isolation phonique est de 50 µm et la limite supérieure de l'épaisseur de la couche d'isolation phonique est de 150 µm.

3. Film intercalaire (1) pour verre feuilleté avec des propriétés d'isolation phonique selon la revendication 1 ou 2,
dans lequel ladite différence est de 30 µm ou moins.

4. Film intercalaire (1) pour verre feuilleté avec des propriétés d'isolation phonique selon les revendications 2 et 3,
dans lequel
la couche d'isolation phonique contient de l'acétal de polyvinyle obtenu par saponification de l'acétate de polyvinyle et ayant un degré de polymérisation de 200 à 5000 et une teneur en plastifiant, basée sur 100 parties en masse de l'acétal de polyvinyle, de 45 parties en masse à 80 parties en masse, dans lequel l'épaisseur de la couche d'isolation phonique présente une limite inférieure de 80 µm et une limite supérieure de 150 µm, et
les couches protectrices sont conçues pour empêcher l'exsudation du plastifiant contenu dans la couche d'isolation phonique et contiennent un acétal de polyvinyle obtenu par acétalisation d'alcool polyvinylique avec un aldéhyde et présentent un degré de polymérisation de 200 à 5000 et présentent une teneur en plastifiant, basée sur 100 parties en masse de l'acétal de polyvinyle, de 20 parties en masse à 45 parties en masse, dans lequel l'épaisseur de chacune des couches protectrices présente une limite inférieure de 300 µm et une limite supérieure de 700 µm.

5. Film intercalaire pour verre feuilleté avec des propriétés d'isolation phonique selon l'une quelconque des revendications 1 à 4,
dans lequel le verre feuilleté avec des propriétés d'isolation phonique est un grand verre feuilleté pour bâtiments.

6. Rouleau (2) comprenant le film intercalaire pour verre feuilleté avec des propriétés d'isolation phonique selon l'une quelconque des revendications 1 à 5, enroulé dans une direction de machine du film lors de la production du film intercalaire pour verre feuilleté.

7. Verre feuilleté avec des propriétés d'isolation phonique comprenant :
une paire de plaques de verre ; et
le film intercalaire (1) pour verre feuilleté avec des propriétés d'isolation phonique selon l'une quelconque des revendications 1 à 5, intercalé entre la paire de plaques de verre.

8. Procédé de production du film intercalaire (1) pour verre feuilleté avec des propriétés d'isolation phonique selon l'une quelconque des revendications 1 à 5, comprenant une étape d'extrusion consistant à extruder, en tant que matière première, une composition de résine à partir d'une filière à l'aide d'une extrudeuse,
l'extrudeuse présentant une variation de pression de refoulement pendant l'étape d'extrusion de ±5 kg/cm² ou moins, la filière ayant une variation de température pendant l'étape d'extrusion de ±20 °C ou moins.

9. Procédé selon la revendication 8, dans laquelle ladite étape d'extrusion est un procédé à lèvre.

10. Procédé de production du rouleau (2) selon la revendication 6, comprenant :
une étape d'extrusion consistant à extruder une composition de résine de matière première à partir d'une filière en utilisant une extrudeuse pour former un film intercalaire pour verre feuilleté ; et
une étape d'enroulement consistant à enrouler le film intercalaire pour verre feuilleté en un rouleau dans une direction d'extrusion du film intercalaire extrudé pour verre feuilleté,
l'extrudeuse présentant une variation de pression de refoulement pendant l'étape d'extrusion de ±5 kg/cm² ou moins, la filière présentant, pendant l'étape d'extrusion, une variation de température de ±20 °C ou moins.
